# DEMANDE DE BREVET EUROPEEN

(11) **EP 4 657 747 A1**
(43) Date de publication de la demande: **03.12.2025**
(21) Numéro de dépôt: 25179811.2
(22) Date de dépôt: 30.05.2025
(51) Int. Cl.: H02P 23/02, H02P 27/08

(54) **PROCÉDÉ DE PILOTAGE D'UN ACTIONNEUR ÉLECTROMÉCANIQUE, ACTIONNEUR ÉLECTROMÉCANIQUE ET DISPOSITIF D' OCCULTATION ASSOCIÉS**

(30) Priorité: 31.05.2024 FR 2405699
(71) Demandeur: Somfy Activites SA, 74300 Cluses (FR)
(72) Inventeur: BRUNO, Serge, 74300 CLUSES (FR)
(74) Mandataire: Lavoix

(57) **Abrégé**

La présente invention concerne un procédé de pilotage d'un actionneur électromécanique comprenant un moteur, le procédé comprenant:
- détermination (102) d'une vitesse de consigne (V_{c}) du moteur ;
- génération (106) de signaux de commande d'un onduleur ;
- fourniture (108) par l'onduleur de courants électriques d'alimentation, en fonction des signaux de commande, afin de faire tourner le moteur à une vitesse de rotation (Vₘ) ; et
- mesure (110) de la vitesse de rotation (Vₘ) du moteur, par un capteur de vitesse.

Une fréquence des signaux de commande générés est fixe et déterminée en fonction de la vitesse de consigne (V_{c}) et un rapport cyclique des signaux de commande est adapté en fonction de la vitesse de rotation (Vₘ) du moteur, mesurée par le capteur de vitesse, pour que la vitesse de rotation (Vₘ) du moteur corresponde à la vitesse de consigne (V_{c}).

## Description

La présente invention concerne un procédé de pilotage d'un actionneur électromécanique, un actionneur électromécanique et un dispositif d'occultation associés.

Pour commander un moteur asynchrone, il est connu d'utiliser un condensateur de déphasage, ainsi que décrit dans EP1918506A2. Il est également connu d'utiliser une méthode de commande dite U/f, dans laquelle le rapport entre une tension appliquée au moteur asynchrone et la fréquence de commande du moteur reste constant pour imposer une vitesse de sortie du moteur.

Cependant, une telle méthode de commande est complexe et implique des ressources de calcul élevées afin d'adapter la commande en faisant varier la fréquence de commande pour faire varier la vitesse de rotation du moteur.

Le but de l'invention est alors de commander un moteur asynchrone avec des variations de vitesse de manière plus simple et sans impliquer de ressources de calcul élevées.

À cet effet, l'invention a pour objet un procédé de pilotage d'un actionneur électromécanique comprenant un moteur asynchrone polyphasé, le procédé comprenant au moins les étapes suivantes :
- détermination d'une vitesse de consigne du moteur, par un dispositif de commande;
- génération de signaux de commande d'un onduleur, par le dispositif de commande;
- fourniture par l'onduleur de courants électriques d'alimentation, en fonction des signaux de commande, pour alimenter le moteur, les courants électriques d'alimentation alimentant les enroulements du moteur afin de faire tourner le moteur à une vitesse de rotation, l'onduleur étant alimenté par un courant électrique continu ; et
- mesure de la vitesse de rotation du moteur, par un capteur de vitesse.

Selon l'invention une fréquence des signaux de commande générés est fixe et déterminée en fonction de la vitesse de consigne et en ce qu'un rapport cyclique des signaux de commande est adapté en fonction de la vitesse de rotation du moteur, mesurée par le capteur de vitesse, pour que la vitesse de rotation du moteur corresponde à la vitesse de consigne.

Grâce à l'invention, seul le rapport cyclique est modifié pour faire varier la vitesse du moteur. Le calcul du rapport cyclique est plus simple et demande moins de ressources que le calcul d'une fréquence de commande, qui est réalisé pour la commande U/f. Ainsi, l'utilisation d'une fréquence de commande fixe permet de simplifier la commande du moteur asynchrone et donc de diminuer les ressources nécessaires pour commander des variations de vitesse du moteur, sans pour autant limiter ou dégrader les performances du moteur de façon générale.

Suivant d'autres aspects avantageux de l'invention, le procédé de pilotage comprend une ou plusieurs des caractéristiques suivantes, prises isolément ou suivant toutes les combinaisons techniquement possibles :
- Les courants électriques d'alimentation sont générés à partir des signaux de commande par modulation de largeur d'impulsion.
- Les courants électriques d'alimentation sont pseudo-sinusoïdaux.
- Le procédé de pilotage comprend une étape d'enregistrement d'une courbe caractéristique optimisée de fréquence des signaux de commande en fonction de la vitesse de consigne, de telle sorte que, lorsque le moteur tourne à une vitesse de consigne donnée et lorsque les signaux de commande ont une fréquence égale à la fréquence donnée par la courbe caractéristique optimisée pour cette vitesse de consigne donnée, un rendement du moteur à la vitesse de consigne donnée est maximal, et dans lequel la fréquence des signaux de commande générés est déterminée en fonction de la vitesse de consigne à partir de la courbe caractéristique optimisée.
- La courbe caractéristique optimisée comprend un premier point correspondant à une vitesse de consigne de 25Hz et une fréquence des signaux de commande de 45Hz, et un deuxième point correspondant à une vitesse de consigne de 50Hz et une fréquence des signaux de commande de 80Hz.

L'invention concerne également un actionneur électromécanique comprenant un moteur asynchrone polyphasé, comprenant plusieurs enroulements, un onduleur, connecté au moteur, et un dispositif de commande, l'actionneur électromécanique étant configuré pour mettre en œuvre le procédé décrit précédemment.

Suivant d'autres aspects avantageux de l'invention, l'actionneur électromécanique comprend une ou plusieurs des caractéristiques suivantes, prises isolément ou suivant toutes les combinaisons techniquement possibles :
- L'onduleur comprend plusieurs branches, chaque branche comprenant plusieurs interrupteurs, un point milieu de chaque branche étant connecté au moteur.
- Le moteur est un moteur asynchrone biphasé, comprenant deux enroulements connectés entre eux par un point neutre ;
- l'onduleur comprend trois branches, chaque branche comprenant deux interrupteur, le point milieu de chaque branche étant localisé entre les deux interrupteurs de la branche ;
- les points milieux d'une première et d'une deuxième branche parmi les trois branches sont respectivement connectés à l'un des enroulements du moteur ; et
- le point milieu de la troisième branche est connecté au point neutre.

L'invention concerne également un dispositif d'occultation comprenant l'actionneur électromécanique décrit précédemment et un écran d'occultation, entraîné par l'actionneur électromécanique, l'écran d'occultation étant configuré pour être déplacé lorsque le moteur tourne.

Avantageusement, le dispositif d'occultation comprend, en outre, un redresseur capacitif, connecté à l'onduleur et configuré pour convertir un courant électrique alternatif en courant électrique continu pour alimenter l'onduleur.

L'invention apparaîtra plus clairement à la lecture de la description qui va suivre, donnée uniquement à titre d'exemple non limitatif, et faite en référence aux dessins dans lesquels :
- [Fig. 1] la figure 1 représente de façon schématique un dispositif d'occultation selon un mode de réalisation de l'invention ;
- [Fig. 2] la figure 2 est un schéma électrique d'un actionneur électromécanique selon un mode de réalisation de l'invention, qui appartient au dispositif d'occultation de la figure 1 ;
- [Fig. 3] la figure 3 est un graphe représentant une fréquence de commande en fonction d'une vitesse de consigne d'un moteur asynchrone de l'actionneur électromécanique de la figure 2, piloté selon un procédé conforme à l'invention ;
- [Fig. 4] la figure 4 est un graphe représentant une intensité d'un courant électrique d'alimentation généré par un onduleur appartenant à l'actionneur électromécanique de la figure 2 ; et
- [Fig. 5] la figure 5 est un logigramme d'un procédé de pilotage selon l'invention.

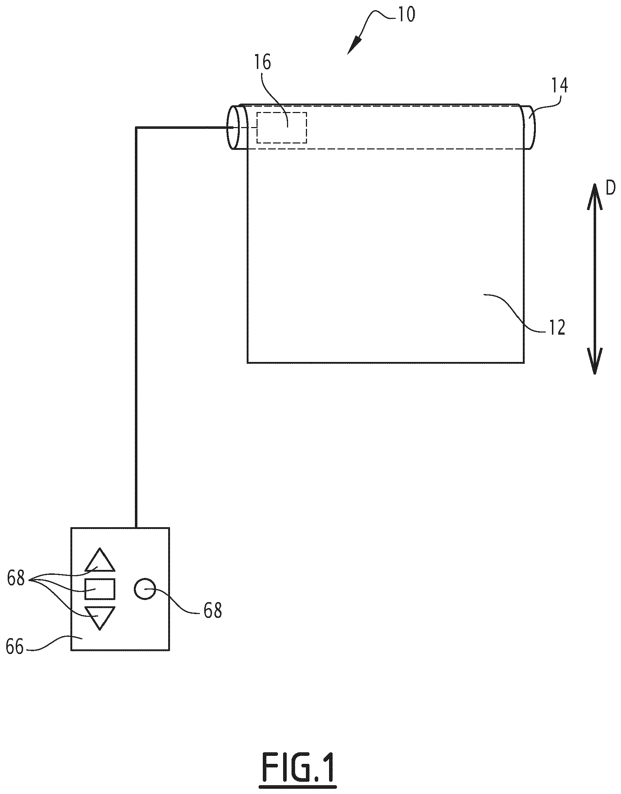

La figure 1 est une vue d'un dispositif d'occultation 10 selon l'invention, comprenant un écran 12, un arbre d'enroulement 14 et un actionneur électromécanique 16. L'écran 12 est par exemple une toile d'occultation ou encore un ensemble de lames, tel qu'un volet roulant. L'écran 12 est fixé à l'arbre d'enroulement 14 et entraîné en déplacement par l'arbre d'enroulement 14. Par exemple, l'écran 12 est configuré pour être déplacé en translation selon une direction de déplacement D, en étant enroulé ou déroulé autour de l'arbre d'enroulement 14. L'arbre d'enroulement 14 est configuré pour être entraîné en rotation par l'actionneur électromécanique 16.

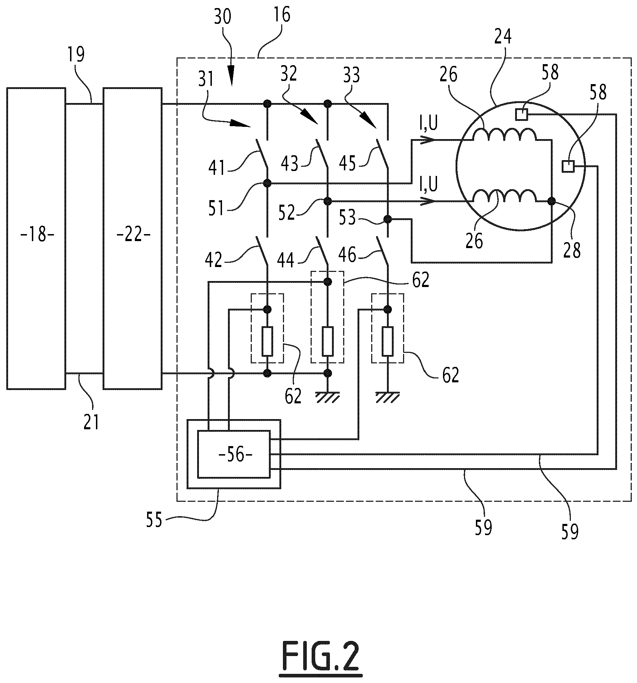

Dans l'exemple représenté à la figure 2, l'actionneur électromécanique 16 est connecté à une source 18 d'alimentation par un conducteur de phase 19 et un conducteur de neutre 21. La source 18 fournit un courant électrique alternatif. La source 18 est, par exemple, une prise électrique connectée au réseau électrique de secteur. Dans l'exemple de la figure 2, le dispositif d'occultation 10 comprend en outre un redresseur capacitif 22, connecté entre la source 18 et l'actionneur électromécanique 16. Le redresseur capacitif 22 est configuré pour convertir le courant électrique alternatif reçu de la source 18 en courant continu. En variante, un redresseur d'un autre type que capacitif est connecté entre la source 18 et l'actionneur électromécanique 16. En variante, le redresseur 22 est intégré dans l'actionneur électromécanique 16.

En variante non représentée, la source 18 fournit un courant électrique continu et est directement connectée à l'actionneur électromécanique 16 ou même intégrée dans l'actionneur électromécanique 16, par exemple si la source 18 est constituée de batteries.

L'actionneur électromécanique 16 comprend un moteur asynchrone 24, également appelé simplement moteur dans ce qui suit. Le moteur 24 est polyphasé, et comprend une pluralité d'enroulements 26. Les enroulements 26, en particulier une sortie des enroulements 26, sont avantageusement connectés entre eux par un point neutre 28. Dans l'exemple de la figure 2, le moteur 24 comprend deux enroulements 26 et est donc un moteur asynchrone biphasé. Une sortie de chaque enroulement 26 est connectée au point neutre 28. Les enroulements 26 sont, par exemple, inclus dans un stator du moteur 24. Un rotor du moteur 24 est par exemple constitué d'une cage métallique, dite aussi cage d'écureuil.

L'actionneur électromécanique 16 comprend en outre un onduleur 30, connecté au moteur 24. Avantageusement, et ainsi que représenté à la figure 2, l'onduleur 30 est connecté au redresseur capacitif 22. L'onduleur 30 est ainsi connecté entre le moteur 24 et le redresseur capacitif 22.

Avantageusement, l'onduleur 30 comprend une pluralité de branches. Dans l'exemple de la figure 2, l'onduleur comprend trois branches 31, 32 et 33. Chaque branche 31, 32, 33 comprend une pluralité d'interrupteurs, par exemple deux interrupteurs, respectivement 41 et 42 pour la branche 31, 43 et 44 pour la branche 32 et 45 et 46 pour la branche 33.

Avantageusement, les interrupteurs sont des interrupteurs à semi-conducteurs, des transistors, par exemple des transistors bipolaires à grille isolée ou IGBT, de l'anglais « Insulated Gated Bipolar Transistor », ou encore des transistors à effet de champ à grille isolée, ou MOSFET, de l'anglais « Metal Oxide Semiconductor Field Effect Transistor ».

Chaque branche 31, 32, 33 comprend un point milieu, respectivement 51, 52, 53, chaque point milieu 51, 52, 53 étant connecté au moteur 24. Avantageusement, et ainsi que représenté sur la figure 2, chaque point milieu 51, 52, 53 est localisé entre les interrupteurs de sa branche 31, 32, 33 respective. Ainsi, le point milieu 51 est localisé entre les interrupteurs 41 et 42, le point milieu 52 est localisé entre les interrupteurs 43 et 44, et le point milieu 53 est localisé entre les interrupteurs 45 et 46.

Avantageusement, les points milieux d'une première branche et d'une deuxième branche parmi les trois branches 31, 32 et 33 sont respectivement connectés à l'un des enroulements 26 du moteur 24, et le point milieu de la troisième branche est connecté au point neutre 28. Dans l'exemple de la figure 2, les points milieux 51 et 52 sont respectivement connectés à l'un des enroulements 26, en particulier à une entrée des enroulements 26, et le point milieu 53 est directement connecté au point neutre 28.

Selon une variante non représentée, le moteur 24 est un moteur triphasé, en configuration étoile ou triangle. Dans le cas d'un moteur en étoile, le moteur 24 comprend trois enroulements 26, connectés entre eux par le point neutre 28. Chaque point milieu 51, 52, 53 de l'onduleur 30 est alors connecté à l'un des enroulements 26 du moteur 24. Dans le cas d'un moteur en triangle, les trois enroulements 26 sont connectés entre eux en triangle, et sont connectés aux points milieu 51, 52, 53 de l'onduleur 30. Par exemple un premier enroulement 26 est connecté aux points milieux 51, 52, un deuxième enroulement 26 est connecté aux points milieux 52 et 53 et un troisième enroulement 26 est connecté aux points milieux 53 et 51.

L'actionneur électromécanique 16 comprend en outre une unité électronique de contrôle 55 comprenant un dispositif de commande 56. Le dispositif de commande 56 est par exemple réalisé sous forme d'un composant logique programmable, tel qu'un FPGA (de l'anglais « Field Programmable Gate Array »), ou encore d'un circuit intégré, tel qu'un ASIC (de l'anglais « Application Specific Integrated Circuit »).

De manière générale, le dispositif de commande 56 comprend des composants logiciels, stockés dans une mémoire non représentée et exécutable par un processeur associé à la mémoire et également non représenté.

Le dispositif de commande 56 est connecté aux interrupteurs 41 à 46 afin de commander ces interrupteurs en commutation entre une configuration passante, dans laquelle les interrupteurs conduisent un courant électrique et une configuration bloquée, dans laquelle les interrupteurs ne conduisent pas de courant électrique. La connexion du dispositif de commande 56 à chaque interrupteur 41 à 46 n'est pas représentée.

Dans le cas où les interrupteurs 41 à 46 sont des transistors, le dispositif de commande 56 est connecté à la grille de chaque interrupteur 41 à 46 pour les commandes en commutation.

Le dispositif de commande 56 est configuré pour réguler une vitesse de rotation Vₘ du moteur 24. A cet effet, le dispositif de commande 56 inclut avantageusement un correcteur Proportionnel Intégral Dérivé, ou PID.

L'actionneur électromécanique 16 comprend au moins un capteur de vitesse 58. En variante, l'actionneur électromécanique 16 comprend plusieurs capteurs de vitesse 58, chaque capteur de vitesse 58 étant formé d'un capteur à effet Hall. Le ou les capteurs de vitesse 58 sont connectés au dispositif de commande 56, de préférence par une ligne de liaison respective 59. Le ou les capteurs de vitesse 58 coopèrent avantageusement avec une roue polaire montée sur le rotor. Le ou les capteurs de vitesse 58 peuvent être utilisés comme capteurs de position de l'écran 12.

De manière avantageuse, l'actionneur électromécanique 16 comprend également des capteurs 62 de l'intensité d'un courant électrique circulant dans chacune des branches 31, 32, 33. Dans l'exemple de la figure 2, les capteurs d'intensité 62 sont des résistances shunt, connectées en série à l'une des branches 31, 32, 33, une mesure de tension étant réalisée aux bornes de ces résistances, et reçue par le dispositif de commande 56 afin d'en déduire l'intensité circulant dans chaque branche 31, 32, 33. En variante, les capteurs d'intensité 62 sont des tores de Rogowski, ou des capteurs magnétorésistifs, ou MEMS.

Le dispositif d'occultation 10 comprend avantageusement une unité de commande, par exemple, une télécommande 66, reliée avec ou sans fil à l'actionneur électromécanique 16 pour commander le dispositif d'occultation 10.

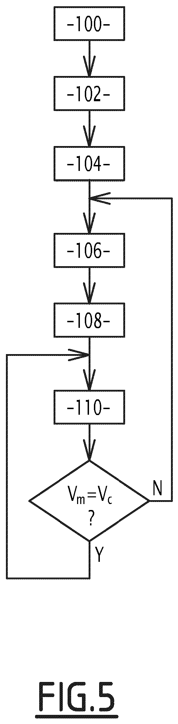

Un procédé de pilotage de l'actionneur électromécanique 16 est décrit ci-dessous, en référence notamment à la figure 5.

Selon un exemple, un utilisateur manipule la télécommande 66, par exemple en appuyant sur l'un de ses boutons 68, pour déplacer l'écran 12. L'unité électronique de contrôle 55 reçoit l'ordre de commande émis par la télécommande 66 lors d'une étape de commande 102, optionnelle, par exemple via un récepteur, non représenté, inclus dans l'unité électronique de contrôle 55. L'utilisateur peut par exemple spécifier une vitesse de déplacement lente ou rapide de l'écran 12

Le dispositif de commande 56 détermine alors une vitesse de consigne V_{c} du moteur 24 lors d'une étape de détermination 104. Par exemple, le dispositif de commande 56 détermine la vitesse de consigne V_{c} correspondant à la vitesse de déplacement de l'écran 12 correspondant à l'ordre de commande. Par exemple, une vitesse de déplacement lente de l'écran correspond à une vitesse de consigne V_{c} du moteur 24 égale à 25Hz, ou 1500 tours par minute, et une vitesse de déplacement rapide de l'écran 12 correspond à une vitesse de consigne V_{c} du moteur égale à 50Hz, ou 3000 tours par minute.

En variante, le dispositif de commande 56 comprend un minuteur ou une horloge et effectue l'étape 104, par exemple à une heure fixe, sans que l'étape de commande 102 soit nécessaire. Alternativement, l'ordre de commande reçu par l'unité électronique de contrôle 55 peut émaner d'un capteur ou d'une télécommande de manière automatique, sans qu'un utilisateur n'ait besoin d'intervenir.

Le dispositif de commande 56 génère des signaux de commande de l'onduleur 30 lors d'une étape de génération 106. Les signaux de commande sont par exemple des impulsions électriques envoyées aux interrupteurs 41 à 46, afin de les commander en commutation. Avantageusement, un signal de commande est envoyé à chaque interrupteur 41 à 46.

Lors de l'étape de génération 106, le dispositif de commande 56 génère des signaux de commande à fréquence f_{cmde} fixe. La fréquence f_{cmde} des signaux de commande est aussi dite fréquence de commande. La fréquence de commande f_{cmde} est déterminée en fonction de la vitesse de consigne V_{c} déterminée à l'étape de détermination 104. En particulier, à une vitesse de consigne V_{c} donnée correspond une unique valeur de la fréquence de commande f_{cmde}. Avantageusement, les signaux de commande sont générés à l'étape 106 également en fonction des intensités du courant dans les branches 31, 32 et 33 mesurées par les capteurs d'intensité 62.

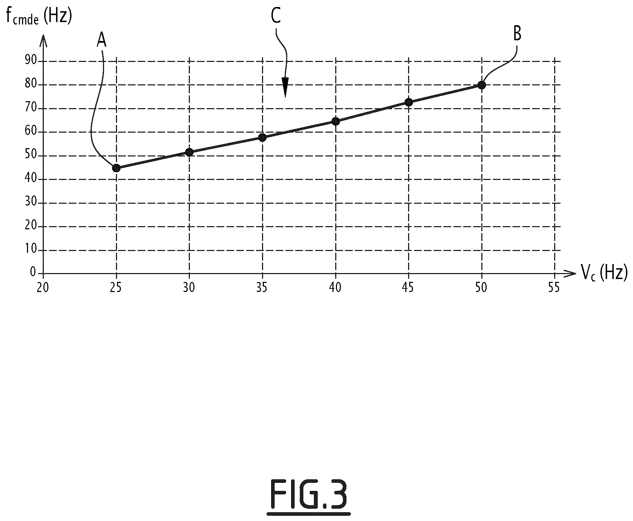

De manière avantageuse, la fréquence de commande f_{cmde} des signaux de commande générés lors de l'étape de génération 106 est déterminée en fonction de la vitesse de consigne V_{c} à partir d'une courbe caractéristique optimisée C, visible à la figure 3.

Dans ce cas, le procédé de pilotage comprend une étape préalable d'enregistrement 100, réalisée par exemple lors de la construction de l'actionneur électromécanique 16. L'étape préalable d'enregistrement 100 consiste en l'enregistrement de la courbe caractéristique optimisée C de fréquence de commande f_{cmde} en fonction de la vitesse de consigne V_{c}. La courbe caractéristique optimisée C est déterminée de telle sorte que, lorsque le moteur 24 tourne à une vitesse de consigne V_{c} donnée et les signaux de commande ont une fréquence f_{cmde} égale à la fréquence donnée par la courbe caractéristique optimisée C pour cette vitesse de consigne V_{c} donnée, un rendement du moteur 24 à la vitesse de consigne V_{c} donnée est maximal.

Le rendement du moteur 24 est le rapport de la puissance de sortie et de la puissance d'entrée du moteur 24.

La courbe caractéristique optimisée C est avantageusement établie par une série de tests, lors desquels le rendement du moteur 24 est calculé en fonction de la fréquence de commande f_{cmde}, pour différentes vitesses de consigne V_{c}. Pour chaque vitesse de consigne V_{c}, la fréquence de commande correspondant au rendement maximum est enregistrée. Ainsi, la courbe caractéristique optimisée C de la fréquence de commande f_{cmde} en fonction de la vitesse de consigne V_{c}, permet, lors de l'étape de génération 106, de déterminer la fréquence de commande f_{cmde} pour obtenir un rendement maximal du moteur 24.

Dans l'exemple de la figure 3, la courbe caractéristique optimisée C comprend un premier point A correspondant à une vitesse de consigne V_{c} de 25Hz et une fréquence des signaux de commande f_{cmde} de 45Hz, et un deuxième point B correspondant à une vitesse de consigne de 50 Hz et une fréquence des signaux de commande f_{cmde} de 80Hz. Selon un exemple, lorsque l'utilisateur indique une vitesse de déplacement lente, le dispositif de commande 56 détermine lors de l'étape de génération 106 un signal de commande de fréquence f_{cmde} égale à 45Hz, et lorsque l'utilisateur indique une vitesse de déplacement rapide, le dispositif de commande 56 détermine lors de l'étape de génération 106 un signal de commande de fréquence f_{cmde} égale à 80Hz.

Ainsi, la fréquence de commande f_{cmde} fixe correspondant à une vitesse de consigne V_{c} donnée est largement supérieure à la vitesse, ou fréquence, de rotation du rotor.

En variante, la fréquence de commande f_{cmde} est, par exemple, déterminée à l'étape 106 par une fonction constante ou encore constante par morceaux, choisie par le constructeur de l'actionneur électromécanique 16.

Avantageusement, lors de l'étape de génération 106, le dispositif de commande 56 détermine également un rapport cyclique des signaux de commande. Le rapport cyclique est par exemple initialement un rapport cyclique établi par défaut, permettant le démarrage, c'est-à-dire que le rapport cyclique est établi pour un couple supérieur au couple nominal, par exemple pour un couple égal à une fois et demi le couple nominal de l'actionneur électromécanique 16.

Avantageusement, lors de l'étape de génération 106, les signaux de commande sont générés par le dispositif de commande 56 par modulation de largeur d'impulsion, ou MLI.

Lors d'une étape de fourniture 108, l'onduleur 30 génère des courants électriques d'alimentation, de fréquence égale à la fréquence de commande f_{cmde} pour alimenter le moteur 24, en fonction des signaux de commande générés à l'étape 106. Les courants électriques d'alimentation ont chacun une intensité I et une tension U. Dans l'exemple de la figure 2, l'onduleur 30 fournit ainsi à chaque enroulement 26 du moteur 24 un courant électrique d'alimentation, afin de faire tourner le moteur à la vitesse de rotation Vₘ. Le moteur 24 entraîne alors en rotation l'arbre d'enroulement 14, qui déplace l'écran 12.

Les courants électriques d'alimentation fournis à chaque enroulement 26 sont identiques mais déphasés de 90° l'un par rapport à l'autre, pour l'exemple de la figure 2 avec deux enroulements 26.

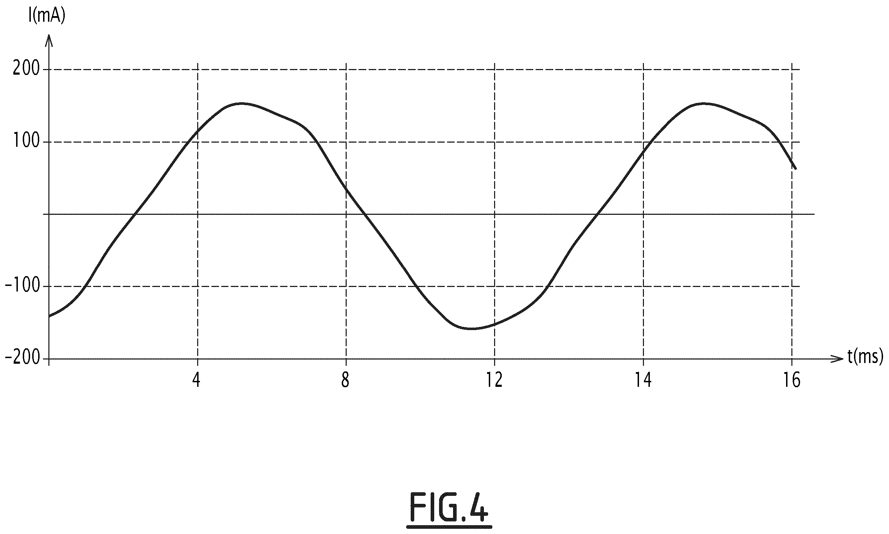

L'intensité I d'un des courants électriques d'alimentation est représentée sur la figure 4.

Afin d'alimenter le moteur 24, l'onduleur 30 est alimenté par un courant électrique continu. Le courant électrique continu est avantageusement fourni par le redresseur capacitif 22, ou en variante, directement par la source 18. Selon un exemple, l'onduleur 30 est alimenté en courant électrique continu dès que le redresseur capacitif 22 est connecté à la source 18. En variante, lors de l'étape 108, le dispositif de commande 56 commande le redresseur capacitif 22 pour qu'il alimente l'onduleur 30 en courant continu.

Avantageusement, les courants électriques d'alimentation fournis par l'onduleur 30 sont pseudo-sinusoïdaux. Ainsi, la génération des signaux de commande qui sont envoyés à chaque interrupteur 41 à 46, lors de l'étape 106, est simplifiée et demande moins de ressources de calcul et d'énergie par rapport à une commande où les courants électriques d'alimentation sont sinusoïdaux. En particulier, l'intensité I des courants électriques d'alimentation est pseudo-sinusoïdale, ainsi que visible à la figure 4.

Les courants électriques d'alimentation, plus précisément, la valeur de la tension U représentative des courants électriques d'alimentation, dépend directement de la valeur du rapport cyclique et permet de faire tourner le moteur 24 à la vitesse de rotation Vₘ. Le moteur 24 étant un moteur asynchrone, la vitesse de rotation Vₘ du moteur 24 n'est pas égale à la fréquence des courants électriques d'alimentation, et donc n'est pas égale à la fréquence de commande f_{cmde}.

Les capteurs de vitesse 58 mesurent la vitesse de rotation Vₘ du moteur 24 lors d'une étape de mesure 110.

Si la vitesse de rotation Vₘ du moteur 24 est sensiblement égale à la vitesse de consigne V_{c}, alors l'unité de commande 56 continue de commander l'onduleur en maintenant le rapport cyclique des signaux de commande inchangé, et effectue à nouveau l'étape de mesure 110. Un fonctionnement itératif est alors mis en oeuvre. Par sensiblement égal à la vitesse de consigne V_{c}, on entend égal à la vitesse de consigne V_{c} plus ou moins 5%. Une tolérance sur cette vitesse de consigne V_{c} est ainsi acceptée.

Si la vitesse de rotation Vₘ du moteur 24 est différente de la vitesse de consigne V_{c}, l'unité de commande 56 effectue à nouveau les étapes 106 à 110. Un fonctionnement **itératif** est alors mis en œuvre. L'étape de génération 106 est effectuée en modifiant le rapport cyclique des signaux de commande. Ceci modifie la tension U du signal de commande moteur fourni à l'étape 108, en particulier, ceci modifie l'amplitude de tension. Ceci modifie donc la vitesse de rotation Vₘ du moteur 24. Ainsi, le rapport cyclique des signaux de commande est adapté en fonction de la vitesse de rotation Vₘ pour que cette dernière corresponde à la vitesse de consigne V_{c}.

Le rapport cyclique des signaux de commande varie ainsi en fonction du couple vu par le moteur, lequel a tendance à faire varier la vitesse de rotation Vₘ mesurée par le capteur de vitesse 58 à l'étape 110, pour maintenir la vitesse de consigne V_{c}.

Ainsi, la fréquence de commande f_{cmde} ne change pas lorsque la vitesse de rotation Vₘ du moteur 24 change.

Le procédé de pilotage d'un actionneur électromécanique tel que décrit est particulièrement bien adapté lorsque l'actionneur électromécanique comprend un frein à friction.

Avantageusement, le schéma électrique et le procédé permettent de se passer d'un condensateur de déphasage encombrant, utilisé classiquement avec un moteur asynchrone biphasé, ce qui a un intérêt particulier dans certaines applications, telles que la motorisation pour de stores vénitiens d'extérieur ou des alimentations secteur de 120V pour lesquels le condensateur de déphasage doit être particulièrement volumineux.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Procédé de pilotage d'un actionneur électromécanique (16) comprenant un moteur asynchrone polyphasé (24), le procédé comprenant au moins les étapes suivantes :
- détermination (102) d'une vitesse de consigne (V_{c}) du moteur (24), par un dispositif de commande (56) ;
- génération (106) de signaux de commande d'un onduleur (30), par le dispositif de commande (56) ;
- fourniture (108) par l'onduleur (30) de courants électriques d'alimentation, en fonction des signaux de commande, pour alimenter le moteur (24), les courants électriques d'alimentation alimentant les enroulements (26) du moteur (24) afin de faire tourner le moteur (24) à une vitesse de rotation (Vₘ), l'onduleur (30) étant alimenté par un courant électrique continu ; et
- mesure (110) de la vitesse de rotation (Vₘ) du moteur (24), par un capteur de vitesse (58),
**caractérisé en ce qu'**une fréquence des signaux de commande (f_{cmde}) générés est fixe et déterminée en fonction de la vitesse de consigne (V_{c}), et **en ce qu'**un rapport cyclique des signaux de commande est adapté en fonction de la vitesse de rotation (Vₘ) du moteur (24), mesurée par le capteur de vitesse (58), pour que la vitesse de rotation (Vₘ) du moteur (24) corresponde à la vitesse de consigne (V_{c}).

2. Procédé de pilotage selon la revendication 1, dans lequel les courants électriques d'alimentation sont générés à partir des signaux de commande par modulation de largeur d'impulsion.

3. Procédé de pilotage selon l'une quelconque des revendications précédentes, dans lequel les courants électriques d'alimentation sont pseudo-sinusoïdaux.

4. Procédé de pilotage selon l'une quelconque des revendications précédentes, comprenant une étape d'enregistrement (100) d'une courbe caractéristique optimisée (C) de fréquence des signaux de commande (f_{cmde}) en fonction de la vitesse de consigne (V_{c}), de telle sorte que, lorsque le moteur (24) tourne à une vitesse de consigne (V_{c}) donnée et lorsque les signaux de commande ont une fréquence (f_{cmde}) égale à la fréquence donnée par la courbe caractéristique optimisée (C) pour cette vitesse de consigne (V_{c}) donnée, un rendement du moteur (24) à la vitesse de consigne (V_{c}) donnée est maximal, et dans lequel la fréquence (f_{cmde}) des signaux de commande générés est déterminée en fonction de la vitesse de consigne (V_{c}) à partir de la courbe caractéristique optimisée (C).

5. Procédé de pilotage selon la revendication 4, dans lequel la courbe caractéristique optimisée (C) comprend un premier point (A) correspondant à une vitesse de consigne (V_{c}) de 25Hz et une fréquence des signaux de commande (f_{cmde}) de 45Hz, et un deuxième point (B) correspondant à une vitesse de consigne (V_{c}) de 50Hz et une fréquence des signaux de commande (f_{cmde}) de 80Hz.

6. Actionneur électromécanique (16), comprenant un moteur asynchrone polyphasé (24), comprenant plusieurs enroulements (26), un onduleur (30), connecté au moteur (24), et un dispositif de commande (56), l'actionneur électromécanique (16) étant configuré pour mettre en œuvre un procédé selon l'une quelconque des revendications précédentes.

7. Actionneur électromécanique (16) selon la revendication 6, dans lequel l'onduleur (30) comprend plusieurs branches (31, 32, 33), chaque branche (31, 32, 33) comprenant plusieurs interrupteurs (41, 42, 43, 44, 45, 46), un point milieu (51, 52, 53) de chaque branche (31, 32, 33) étant connecté au moteur (24).

8. Actionneur électromécanique (16) selon la revendication 7, dans lequel :
- le moteur (24) est un moteur asynchrone biphasé, comprenant deux enroulements (26) connectés entre eux par un point neutre (28) ;
- l'onduleur (30) comprend trois branches (31, 32, 33), chaque branche (31, 32, 33) comprenant deux interrupteurs (41, 42, 43, 44, 45, 46), le point milieu (51, 52, 53) de chaque branche (31, 32, 33) étant localisé entre les deux interrupteurs (41, 42, 43, 44, 45, 46) de la branche (31, 32, 33) ;
- les points milieux (51, 52) d'une première et d'une deuxième branche (31, 32) parmi les trois branches (31, 32, 33) sont respectivement connectés à l'un des enroulements (26) du moteur (24) ; et
- le point milieu (53) de la troisième branche (33) est connecté au point neutre (28).

9. Dispositif d'occultation (10), comprenant l'actionneur électromécanique (16) selon l'une quelconque des revendications 6 à 8 et un écran d'occultation (12), entraîné par l'actionneur électromécanique (16), l'écran d'occultation (12) étant configuré pour être déplacé lorsque le moteur (24) tourne.

10. Dispositif d'occultation (10) selon la revendication 9, comprenant, en outre, un redresseur capacitif (22), connecté à l'onduleur (30) et configuré pour convertir un courant électrique alternatif en courant électrique continu pour alimenter l'onduleur (30).
